(19) Europäisches Patentamt
European Patent Office
Office européen des brevets

(11) **EP 3 213 847 B1**

(12) **EUROPÄISCHE PATENTSCHRIFT**

(45) Veröffentlichungstag und Bekanntmachung des Hinweises auf die Patenterteilung:
**27.04.2022 Patentblatt 2022/17**

(21) Anmeldenummer: **17158793.4**

(22) Anmeldetag: **02.03.2017**

(51) Internationale Patentklassifikation (IPC):
**B23D 61/00** (2006.01)    **B23D 61/12** (2006.01)

(52) Gemeinsame Patentklassifikation (CPC):
**B23D 61/006; B23D 61/123**

(54) **OSZILLATIONSWERKZEUG**

OSCILLATION TOOL

OUTIL D'OSCILLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2016 DE 102016103903**

(43) Veröffentlichungstag der Anmeldung:
**06.09.2017 Patentblatt 2017/36**

(73) Patentinhaber: **Wolfcraft GmbH**
**56746 Kempenich (DE)**

(72) Erfinder:
• **Schüller, Hans-Jürgen**
**53426 Königsfeld (DE)**
• **Noniewicz, Zbigniew**
**56746 Kempenich (DE)**

(74) Vertreter: **Grundmann, Dirk et al**
**Rieder & Partner mbB**
**Patentanwälte - Rechtsanwalt**
**Yale-Allee 26**
**42329 Wuppertal (DE)**

(56) Entgegenhaltungen:
**DE-U1-202011 108 736    US-A- 3 706 474**
**US-A1- 2013 160 631    US-A1- 2015 273 706**

## Beschreibung

### Gebiet der Technik

Die Erfindung betrifft ein Werkzeug mit einem bezogen auf eine Oszillationsachse eines an einem Antriebsprofil einer Handwerkzeugmaschine befestigbaren Abtriebsprofils radial abragenden Oszillationsarm, an dessen von der Oszillationsachse entfernten Ende ein flacher, in der Oszillationsebene liegender Antriebsarm in azimutaler Richtung abragt, der an seinem sich in azimutaler Richtung erstreckenden Rand ein Arbeitsprofil aufweist, wobei unter azimutaler Richtung die Oszillationsrichtung um die Oszillationsachse verstanden wird.

### Stand der Technik

Ein Werkzeug, bei dem von einem um eine Oszillationsachse schwenkantreibbaren Oszillationsarm ein Arbeitsarm im Wesentlichen senkrecht abragt, der an seiner von der Oszillationsachse weg weisenden Randkante eine Sägeverzahnung aufweist, so dass das Werkzeug als Stichsäge verwendet werden kann, beschreibt die CN 102371394 B = WO 2012/022269 A.

Die US 3,706,474 beschreibt eine Oszillationssäge gemäß dem Oberbegriff des Anspruchs 1, mit einem kurzen und einem langen jeweils mit einer Sägeverzahnung versehenen Arm, wobei der kurze Arm eine etwa rechteckige Fläche und der lange Arm eine etwa dreieckige Fläche aufweist. Die DE 20 2011 108 736 U1 beschreibt ein Oszillationswerkzeug mit einem langen Arbeitsarm und einem kurzen Arbeitsarm. Auch hier ist die Fläche des langen Arbeitsarmes größer als die Fläche des kurzen Arbeitsarmes.

Die US 2015/0273706 A1 beschreibt ein Werkzeug mit zwei gleich gestalteten Armen.

Ein ähnliches Werkzeug wird von der DE 692 20 066 T2 beschrieben. Die DE 82 11 249 U1 beschreibt eine Stichsäge. Eine Handwerkzeugmaschine zum oszillierenden Antrieb eines Oszillationswerkzeugs beschreibt die US 2011/0072946 A1. Von einem Elektromotor wird eine Antriebswelle der Handwerkzeugmaschine schnell um ihre Achse oszillierend angetrieben. Am freien Ende der Antriebswelle befindet sich ein Antriebsprofil mit in Achsrichtung von einem Montageteller abragenden Vorsprüngen, die formschlüssig in Formschlusseingriffsöffnungen des Abtriebsprofils des Oszillationswerkzeuges eingreifen können, so dass der Oszillationsarm in eine drehfeste Verbindung mit der Antriebsachse gebracht werden kann, so dass er mit einer hohen Frequenz hin- und herschwingt. Ein Arbeitsprofil besitzt eine Sägeverzahnung, die sich in azimutaler Richtung erstreckt und die beim Betrieb des Werkzeuges in der Oszillationsebene hin- und herschwingt.

### Zusammenfassung der Erfindung

Der Erfindung liegt die Aufgabe zugrunde, das eingangs charakterisierte Werkzeug derart weiterzubilden, dass es wie eine Stichsäge verwendet werden kann.

Gelöst wird die Aufgabe durch ein Werkzeug gemäß Anspruch 1. Die Unteransprüche stellen bevorzugte Weiterbildungen dar.

Bei einem Werkzeug, welches eine L-förmige Gestalt besitzt, wobei der Oszillationsarm einen L-Schenkel und der Arbeitsarm den zweiten L-Schenkel ausbildet, kommt es zu Querschwingungen, die ein Flattern des Arbeitsblatts bewirken. Dies führt zu unsauberen Schnitten, wenn das Werkzeug in der Art einer Stichsäge verwendet wird, wobei der Arbeitsarm in das Werkstück eintaucht und die Schnittrichtung parallel zur Oberfläche des Werkstücks verläuft.

Mit dem Kompensationsarm des erfindungsgemäßen Werkzeugs, der vom Oszillationsarm in Gegenrichtung zum Antriebsarm abragt, wird eine Kompensationsmasse gebildet. Das Werkzeug hat eine in der Breitseitenansicht T-förmige Gestalt, wobei der T-Steg vom Oszillationsarm und die beiden T-Schenkel vom Arbeitsarm bzw. vom Kompensationsarm ausgebildet sind. In dem das Arbeitsprofil sich entlang einer Geraden erstreckt, die einen spitzen Winkel zur Mittellinie des Oszillationsarmes besitzt und gleichzeitig eine senkrecht die Erstreckungslinie des Arbeitsprofils mittig teilende Linie durch die Oszillationsachse verläuft, ergibt sich ein spitzwinklig schräger Verlauf des Oszillationsarmes gegenüber der Erstreckungslinie des Arbeitsprofils. Der Kompensationsarm hat eine geringere sich in azimutaler Richtung erstreckende Länge als der Arbeitsarm, wobei die Länge des Arbeitsarmes der jeweilige Abstand des freien Endes von einer durch den Oszillationsarm gelegten Mittellinie ist. Der Kompensationsarm hat darüber hinaus auch einen geringeren azimutalen Überstand über den Oszillationsarm als der Arbeitsarm. Unter azimutalem Überstand des Arbeitsarmes bzw. des Kompensationsarmes wird die Strecke verstanden, um die der Arbeitsarm bzw. der Kompensationsarm in azimutaler Richtung über eine Randkante des Oszillationsarmes ragt. Der Oszillationsarm hat zwei parallel zueinander verlaufende Randkanten, die von einer gedachten Mittellinie gleich weit beabstandet sind, wobei die Mittellinie durch die Oszillationsachse verläuft. Die über den Oszillationsarm hinausragende Breitseitenfläche des Kompensationsarmes ist bevorzugt größer als die über den Oszillationsarm hinausragende Breitseitenfläche des Arbeitsarmes. Hierzu ist vorgesehen, dass die radiale Breite des Kompensationsarmes größer ist als die radiale Breite des Arbeitsarmes. Das Arbeitsprofil ist bevorzugt eine Sägeverzahnung. Das Arbeitsprofil erstreckt sich vom freien Ende des Arbeitsarmes zum freien Ende des Kompensationsarmes. Außerdem liegt das Arbeitsprofil auf der von der Oszillationsachse weg weisenden Randkante des Arbeitsarmes und erstreckt sich innerhalb der Oszillationsebene sowie entlang einer Geraden, die einen Neigungswinkel zu einer senkrecht durch die Mittellinie gezogenen Geraden besitzt. Zieht man durch einen von den beiden Enden des Arbeitsprofils etwa gleich beabstandeten Punkt des Arbeitsprofils eine senkrecht zur Erstreckungsrichtung des Arbeitsprofils verlaufende Linie, so schneidet diese Linie die Mittellinie des Oszillationsarms in der Oszillationsachse. Mit dem Kompensationsarm wird die beim Stand der Technik große Asymmetrie der Flächenträgheitsmomente bezogen auf die Mittellinie vermindert. Der Kompensationsarm kann ein Flächenträgheitsmoment besitzen, welches zwischen der Hälfte des Flächenträgheitsmomentes und dem Doppelten des Flächenträgheitsmomentes des Arbeitsarmes liegt. Der Arbeitsarm, der Kompensationsarm und der Oszillationsarm liegen in einer gemeinsamen Ebene, bei der es sich um die Oszillationsebene handelt. Auch der Abtriebsprofilabschnitt, der am Antriebsprofilabschnitt der Handwerkzeugmaschine befestigbar ist, kann in dieser Oszillationsebene liegen. Der Abtriebsprofilabschnitt kann aber auch in einer Parallelebene zu der Oszillationsebene liegen, in der sich das Arbeitsprofil erstreckt. Die Breite des Kompensationsarmes kann mehr als das Doppelte der Breite des Antriebsarmes betragen. Die azimutale Länge des Arbeitsarmes kann mehr als das Anderthalbfache der azimutalen Länge des Kompensationsarmes betragen. Der azimutale Überstand des Arbeitsarmes kann ebenfalls mehr als das Anderthalbfache des azimutalen Überstands des Kompensationsarmes betragen. Das Werkzeug wird bevorzugt aus Stahl gefertigt. Bei der bevorzugten Sägeverzahnung kann es sich um eine geschliffene oder um eine geschränkte Verzahnung handeln. Während die Breite des Arbeitsarmes bevorzugt etwa 1 cm beträgt, beträgt die Breite des Kompensationsarmes bevorzugt etwa 3,5 cm. Die Gesamtlänge der Verzahnung beträgt bevorzugt etwa 12 cm. Die Mittellinie kann die Verzahnung in einem Verhältnis von etwa 1 : 2 teilen.

## Kurze Beschreibung der Zeichnungen

Die Erfindung wird anhand der beigefügten Zeichnung erläutert, die die Breitseitenansicht eines Oszillationswerkzeuges zeigt.

## Beschreibung der Ausführungsformen

Die Zeichnung zeigt ein erfindungsgemäßes aus einem Metallblech gestanztes Oszillationswerkzeug, welches sich in einer Oszillationsebene erstreckt, die senkrecht zu einer Oszillationsachse A verläuft und mit der Papierebene übereinstimmt.

Die Oszillationsachse A befindet sich etwa im Zentrum einer Öffnung, die eine Vielzahl von Aussparungen aufweist. Die Aussparungen bilden einen Abtriebsprofilabschnitt 2 aus. In die Aussparungen können Vorsprünge eines Antriebstellers eingreifen, der einem Antriebsprofil einer Handwerkzeugmaschine zugeordnet ist. Der Antriebsteller wird von einem Antriebsmotor um die Antriebsachse A oszillierend angetrieben.

Vom Abtriebsprofilabschnitt 2 erstreckt sich in einer bezogen auf die Antriebsachse a radialen Richtung ein Oszillationsarm 1. Der Oszillationsarm 1 besitzt zwei Randkanten 10, 11, die parallel zueinander verlaufen. Mittig zwischen den beiden Randkanten 10, 11 verläuft eine Mittellinie a, die durch die Antriebsachse A verläuft.

In einer radialen Entfernung von der Antriebsachse A bzw. vom Abtriebsprofilabschnitt 2 befindet sich ein Arbeitsprofil 5, das beim Ausführungsbeispiel von einer Sägeverzahnung ausgebildet ist. Es kann auch eine Schneide sein. Das Arbeitsprofil 5 erstreckt sich entlang einer Geraden b. Diese Gerade b definiert die Erstreckungsrichtung des Arbeitsprofils 5 in der Oszillationsebene. Das Arbeitsprofil 5 erstreckt sich vom freien Ende 8 eines Arbeitsarmes 3 zu einem freien Ende 9 eines Kompensationsarmes 4. Die Erstreckungslinie b, entlang der sich das Abtriebsprofil 5 erstreckt, verläuft um einen Winkel β geneigt zu einer Linie d, die die Mittellinie a senkrecht schneidet.

Eine die Mittellinie a in der Achse A schneidende Linie c, die um einen Winkel α geneigt zur Mittellinie a verläuft, steht in einem Punkt senkrecht auf der Erstreckungslinie b, der mittig zwischen den freien Enden 8, 9 liegt. Von dem Schnittpunkt der Mittellinie a mit dem Abtriebsprofil 5 erstreckt sich das Abtriebsprofil zu den beiden freien Enden 8, 9 entlang von Strecken, die in einem Verhältnis 1 : 2 stehen.

Der Abstand zwischen den freien Enden 8, 9 ist größer als der Abstand der beiden Randkanten 10, 11 zueinander. Der Kompensationsarm 4 überragt die Randkante 10 in azimutaler Richtung um einen azimutalen Überstand $U_2$. Der Arbeitsarm 3 überragt die Randkante 11 in azimutaler Richtung um einen azimutalen Überstand $U_1$. Der azimutale Überstand $U_1$ ist größer als der azimutale Überstand $U_2$. Eine dem freien Ende 9 zugeordnete Randkante ist gemittelt um die Länge $L_2$ von der Mittellinie a beabstandet. Eine vom freien Ende 8 ausgehende Randkante ist im Mittel um eine Länge $L_1$ von der Mittellinie a beabstandet. Bevorzugt ist die Länge $L_1$ bzw. der azimutale Überstand $U_1$ mindestens um das Anderthalbfache größer als die Länge $L_2$ bzw. der azimutale Überstand $U_2$. Der azimutale Überstand $U_1$ kann etwa das Doppelte des azimutalen Überstandes $U_2$ betragen. Bevorzugt ist der azimutale Überstand $U_1$ nicht größer als das Dreifache des azimutalen Überstandes $U_2$.

Der Arbeitsarm 3 besitzt eine quer zur Erstreckung der Erstreckungslinie b des Arbeitsprofils 5 gemessene Breite $W_1$. Der Kompensationsarm 4 besitzt eine quer zur Erstreckungslinie b gemessene Breite $W_2$, wobei die Breite $W_2$ größer ist als die Breite $W_1$. Bevorzugt ist die Breite $W_2$ mindestens doppelt so groß wie die Breite $W_1$. Der Quotient der beiden azimutalen Überstände kann in folgenden Bereichen liegen:

$$0,5 < U_2/W_2 < 2$$

$$2 < U_1/W_1 < 10.$$

Bevorzugt ist der Quotient $U_1/W_1$ mindestens doppelt, bevorzugt viermal so groß wie der Quotient $U_2/W_2$, wobei insbesondere vorgesehen ist, dass der Quotient $U_2/W_2$ kleiner 1 ist und der Quotient $U_1/W_1$ größer 3 ist.

Die Flächen von Arbeitsarm 3 und Kompensationsarm 4 können gleich oder voneinander verschieden sein, wobei auch hier der azimutale Überstand $U_1$ der Abstand des freien Endes 8 von der dem Arbeitsarm 3 benachbarten Randkante 11 und der azimutale Überstand $U_2$ der Abstand des freien Endes 9 von der dem Kompensationsarm 4 zugeordneten Randkante 10 ist, und die Breiten $W_1$, $W_2$ jeweils die Abstände der parallel oder leicht geneigt zum Arbeitsprofil 5 verlaufenden rückwärtigen Ränder des Arbeitsarmes 3 bzw. Kompensationsarmes 4 zum Arbeitsprofil 5 sind.

Der über die Randkante 10 in azimutaler Richtung hinausragende Abschnitt des Kompensationsarmes 4 bildet eine Kompensationsmasse zu der Masse des Arbeitsarmes 3, die von dem über die Randkante 11 in azimutaler Richtung hinausragenden Abschnitt des Arbeitsarmes 3 gebildet wird. Es ist bevorzugt vorgesehen, dass die Beiträge zu den Flächenträgheitsmomenten der über die Randkanten 10, 11 hinausragenden Abschnitte des Arbeitsarmes 3 bzw. des Kompensationsarmes 4 in einer ähnlichen Größe sind. Die beiden Beiträge zum Flächenträgheitsmoment unterscheiden sich bevorzugt um höchstens einen Betrag, der zwischen 0,5 und 2 liegt, wobei sich die Flächenträgheitsmomente auf die Mittellinie a beziehen.

Erfindungsgemäß verläuft das Arbeitsprofil 5 entlang einer geraden Linie b, die um einen Winkel $\beta$ geneigt zu einer Senkrechten d zur Mittellinie a und eine etwa in der azimutalen Mitte des Arbeitsprofils 5 die Erstreckungslinie b des Arbeitsprofiles 5 senkrecht schneidende Linie c verläuft durch die Oszillationsachse A.

Liste der Bezugszeichen

| | |
|---|---|
| 1 | Oszillationsarm |
| 2 | Abtriebsprofilabschnitt |
| 3 | Arbeitsarm |
| 4 | Kompensationsarm |
| 5 | Sägeverzahnung |
| 6 | rückw. Randkante |
| 7 | rückw. Randkante |
| 8 | freies Ende |
| 9 | freies Ende |
| 10 | Randkante |
| 11 | Randkante |
| | |
| A | Oszillationsachse |
| $L_1$ | Länge |
| $L_2$ | Länge |
| $U_1$ | Überstand |
| $U_2$ | Überstand |
| $W_1$ | Breite |
| $W_2$ | Breite |
| | |
| a | Mittellinie |
| b | Erstreckungslinie |
| c | Mittelachse |
| d | Senkrechte |
| $\alpha$ | Winkel |
| $\beta$ | Winkel |

**Patentansprüche**

1. Werkzeug mit einem bezogen auf eine Oszillationsachse (A) eines an einem Antriebsprofil einer Handwerkzeugmaschine befestigbaren Abtriebsprofils (2) radial abragenden Oszillationsarm (1), an dessen von der Oszillationsachse (A) entfernten Ende in azimutaler Richtung ein flacher, in der Oszillationsebene liegender Arbeitsarm (3) und in Gegenrichtung zum Arbeitsarm (3) ein flacher Kompensationsarm (4) abragen, die an ihren von der Oszillationsachse (A) wegweisenden Längsrändern ein sich von einem freien Ende (8) des Arbeitsarmes (3) bis zu einem freien Ende (9) des Kompensationsarmes (4) erstreckendes Arbeitsprofil (5) aufweisen, wobei eine azimutale Länge ($L_1$) des Arbeitsarmes (3) größer ist als eine azimutale Länge ($L_2$) des Kompensationsarmes (4), und ein azimutaler Überstand ($U_1$) des Arbeitsarmes (3) über den Oszillationsarm (1) größer ist als ein azimutaler Überstand ($U_2$) des Kompensationsarmes (4) über den Oszillationsarm (1), **dadurch gekennzeichnet, dass** sich das Arbeitsprofil (5) entlang einer Geraden (b) erstreckt, die um einen Winkel ($\beta$) geneigt gegenüber einer Senkrechten (d) zu einer Mittellinie (a) durch den Oszillationsarm (1) verläuft, und eine etwa in der azimutalen Mitte des Arbeitsprofils (5) die Erstreckungslinie (b) des Arbeitsprofiles (5) senkrecht schneidende Linie (c) durch die Oszillationsachse (A) verläuft.

2. Werkzeug nach Anspruch 1, **dadurch gekennzeichnet, dass** die radiale Breite ($W_1$) des Arbeitsarmes (3) kleiner ist als die radiale Breite ($W_2$) des Kompensationsarmes (4).

3. Werkzeug nach einem der vorangehenden Ansprüche, **dadurch gekennzeichnet, dass** das Arbeitsprofil (5) eine Sägeverzahnung ist.

4. Werkzeug nach einem der vorangehenden Ansprüche, **dadurch gekennzeichnet, dass** die Breitseitenfläche ($U_2*W_2$) des freien Endabschnitts des Kompensationsarmes (4) mindestens dem Anderthalbfachen der Breitseitenfläche ($U_1*W_1$) des freien Endabschnitts des Arbeitsarmes (3) entspricht.

**5.** Werkzeug nach einem der vorangehenden Ansprüche, **dadurch gekennzeichnet, dass** Oszillationsarm (1), Arbeitsarm (3) und Kompensationsarm (4) materialeinheitlich miteinander verbunden sind.

## Claims

**1.** Tool having an oscillation arm (1) projecting radially in relation to an oscillation axis (A) of an output profile (2) that can be fastened to a drive profile of a handheld power tool, from the end of which oscillation arm, which end is remote from the oscillation axis (A), a flat working arm (3), lying in the oscillation plane, projects in the azimuthal direction and a flat compensation arm (4) projects in the opposite direction to the working arm (3), which flat working arm and flat compensation arm have, at the longitudinal edges thereof pointing away from the oscillation axis (A), a working profile (5) extending from a free end (8) of the working arm (3) to a free end (9) of the compensation arm (4), an azimuthal length ($L_1$) of the working arm (3) being greater than an azimuthal length ($L_2$) of the compensation arm (4), and an azimuthal overhang ($U_1$) of the working arm (3) over the oscillation arm (1) being greater than an azimuthal overhang ($U_2$) of the compensation arm (4) over the oscillation arm (1), **characterised in that** the working profile (5) extends along a straight line (b), which is inclined at an angle ($\beta$) relative to a line (d) that is perpendicular to a central line (a) through the oscillation arm (1), and a line (c), which, approximately in the azimuthal centre of the working profile (5), perpendicularly intersects the extension line (b) of the working profile (5), extends through the oscillation axis (A).

**2.** Tool according to claim 1, **characterised in that** the radial width ($W_1$) of the working arm (3) is smaller than the radial width ($W_2$) of the compensation arm (4).

**3.** Tool according to either of the preceding claims, **characterised in that** the working profile (5) is a saw toothing.

**4.** Tool according to any of the preceding claims, **characterised in that** the broad side surface ($U_2*W_2$) of the free end portion of the compensation arm (4) corresponds to at least one and a half times the broad side surface ($U_1*W_1$) of the free end portion of the working arm (3).

**5.** Tool according to any of the preceding claims, **characterised in that** the oscillation arm (1), working arm (3) and compensation arm (4) are materially uniformly interconnected.

## Revendications

**1.** Outil avec un bras oscillant (1) faisant saillie radialement par rapport à un axe d'oscillation (A) d'un profilé de sortie (2) pouvant être fixé sur un profilé d'entraînement d'une machine-outil à main, et, en saillie dans la direction azimutale à l'extrémité du bras oscillant (1) qui est éloignée de l'axe d'oscillation (A), un bras de travail (3) situé dans le plan d'oscillation et un bras de compensation plat (2) dans la direction opposée au bras de travail (3), qui présentent, sur leurs bords longitudinaux tournés à l'opposé de l'axe d'oscillation (A), un profil de travail (5) s'étendant depuis une extrémité libre (8) du bras de travail (3) jusqu'à une extrémité libre (9) du bras de compensation (4), une longueur azimutale ($L_1$) du bras de travail (3) étant supérieure à une longueur azimutale ($L_2$) du bras de compensation (4), et une saillie azimutale ($U_1$) du bras de travail (3) au-delà du bras d'oscillation (1) étant plus grande qu'une saillie azimutale ($U_2$) du bras de compensation (4) au-delà du bras d'oscillation (1), **caractérisé en ce que** le profil de travail (5) s'étend le long d'une droite (b) qui est inclinée d'un angle ($\beta$) par rapport à une perpendiculaire (d) à une ligne médiane (a) traversant le bras oscillant (1), et une ligne (c) coupant perpendiculairement la ligne d'extension (b) du profil de travail (5) approximativement au milieu azimutal du profil de travail (5) passe par l'axe d'oscillation (A).

**2.** Outil selon la revendication 1, **caractérisé en ce que** la largeur radiale ($W_1$) du bras de travail (3) est inférieure à la largeur radiale ($W_2$) du bras de compensation (4).

**3.** Outil selon l'une des revendications précédentes, **caractérisé en ce que** le profil de travail (5) est une denture de scie.

**4.** Outil selon l'une des revendications précédentes, **caractérisé en ce que** la superficie du côté large ($U_2*W_2$) de la portion d'extrémité libre du bras de compensation (4) est au moins égale à une fois et demie la superficie du côté large ($U_1*W_1$) de la portion d'extrémité libre du bras de travail (3).

**5.** Outil selon l'une des revendications précédentes, **caractérisé en ce que** le bras oscillant (1), le bras de travail (3) et le bras de compensation (4) sont reliés entre eux en venant unitairement de matière.

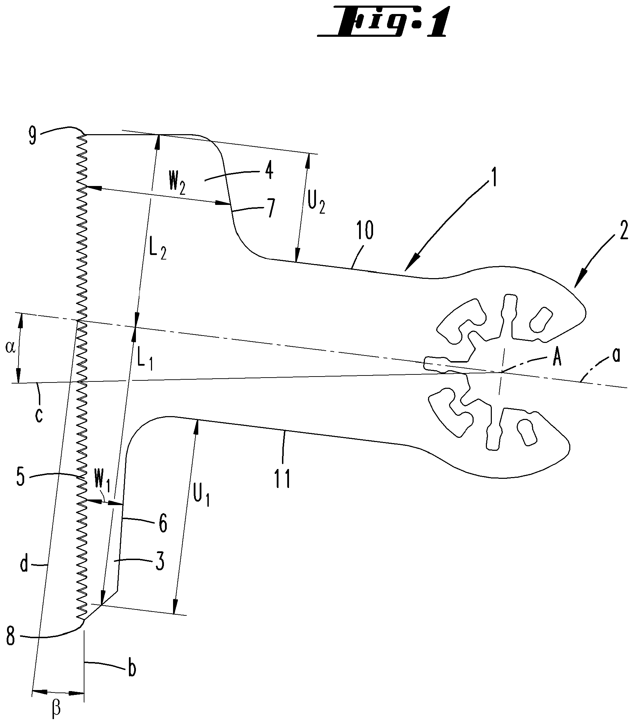

# Fig. 1

**IN DER BESCHREIBUNG AUFGEFÜHRTE DOKUMENTE**

**In der Beschreibung aufgeführte Patentdokumente**

- WO 2012022269 A
- US 3706474 A
- DE 202011108736 U1
- US 20150273706 A1
- DE 69220066 T2
- DE 8211249 U1
- US 20110072946 A1